# EUROPÄISCHE PATENTSCHRIFT

(11) **EP 2 508 810 B1**
(45) Veröffentlichungstag und Bekanntmachung des Hinweises auf die Patenterteilung: **31.07.2013**
(21) Anmeldenummer: 11002957.6
(22) Anmeldetag: 08.04.2011
(51) Int. Cl.: F24F 7/06, F24F 11/00, F24F 11/02, F24F 11/04

(54) **Ventilatormodul**
Ventilator module
Module de ventilateur

(43) Veröffentlichungstag der Anmeldung: 10.10.2012
(60) Teilanmeldung: 12172715.0
(73) Patentinhaber: Zehnder Verkaufs- und Verwaltungs AG, 5722 Gränichen (CH)
(72) Erfinder: Meijer, Gerrit, 7772 MC Hardenberg (NL); Jansen, Peter Johan, 8042 GG Zwolle (NL); de Jong, Christiaan, 7722 AX Dalfsen (NL)
(74) Vertreter: Stenger, Watzke & Ring

(56) Entgegenhaltungen:
- EP-A2- 0 415 747
- WO-A1-2007/004446
- WO-A1-2010/122117
- WO-A1-2011/004025
- GB-A- 2 298 057
- JP-A- 2000 088 299
- KR-A- 20100 133 094
- US-A1- 2002 164 944

## Beschreibung

Die Erfindung betrifft ein Ventilatormodul für eine Lüftungseinheit zur Versorgung eines Raumes oder eines Teils hiervon mit Zuluft, insbesondere Frischluft, vorzugsweise im Austausch gegen aus dem Raum oder einem Teil hiervon stammender Abluft.

Lüftungseinheiten der vorgenannten Art sind aus dem Stand der Technik an sich bekannt (Siehe z.B. Patentdokument WO-2010/122117-A). Es bedarf deshalb eines gesonderten druckschriftlichen Nachweises an dieser Stelle nicht.

Lüftungseinheiten der vorgenannten Art verfügten typischerweise über eine Ventilator einerseits und einen Wärmetauscher andererseits. Über den Ventilator wird Frischluft von außen angesaugt und in den Raum hineintransportiert. Im Austausch gegen diese dem Raum von außen zugeführte Frischluft wird aus dem Raum Abluft abtransportiert und in die den Raum umgebende Atmosphäre abgegeben. Zum Zwecke der Energieeinsparung werden die Zuluft und die Abluft über einen Wärmetauscher geführt, so dass eine Energieübertragung in Form eines Wärmeübergangs von der Zuluft auf die Abluft beziehungsweise in umgekehrter Richtung stattfinden kann.

Ventilatoren vorbekannter Lüftungseinheiten sind typischerweise zur Geräuschminimierung gekapselt ausgebildet und/oder außerhalb des zu belüftenden Raumes angeordnet. Dabei kommen je nach Einbausituation vor Ort und/oder zu fordernder Förderleistung entsprechend ausgestaltete Ventilatoren zum Einsatz.

Neben den schon vorbeschriebenen Komponenten können aus dem Stand der Technik bekannte Lüftungseinheiten über weitere Bauteile verfügen, wie zum Beispiel Strömungsmesseinrichtungen, Temperatursensoren, Heizeinrichtungen und/oder dergleichen. Diese weiteren Bauteile sind am Einbauort monteurseitig zu installieren und in Ihrer jeweiligen Wechselwirkung aufeinander abzustimmen, damit eine ordnungsgemäße Funktion der Lüftungseinheit sichergestellt ist.

Obgleich sich vorbekannte Lüftungseinheiten im alltäglichen Praxiseinsatz bewährt haben, besteht Verbesserungsbedarf, insbesondere mit Blick auf eine vereinfachte Montage vor Ort bei gleichzeitiger Verbesserung der Betriebssicherheit.

Es ist deshalb die **Aufgabe** der Erfindung, eine Lüftungseinheit der eingangs genannten Art zur Verfügung stellen zu können, die gesteigerten Ansprüchen an Montagefreundlichkeit und Betriebssicherheit gerecht wird.

Zur **Lösung** dieser Aufgabe wird mit der Erfindung ein Ventilatormodul nach den Anspruch 1 vorgeschlagen. Dieses Ventilatormodul findet mit einer Lüftungseinheit zur Versorgung eines Raums oder eines Teils hiervon mit Zuluft, insbesondere Frischluft Verwendung und ist als eigenständig handhabbare Baugruppe ausgebildet. Das Modul umfasst eine Ventilatoreinrichtung, eine Vorrichtung zur Ermittlung des von der Ventilatoreinrichtung transportierten Luftstromes sowie eine Steuerungseinrichtung, die Sensoren für Temperatur, Strömungsvolumen und relative Luftfeuchte umfasst, wobei das Ventilatormodul als gekapselte Baueinheit ausgestaltet ist, die zum Zwecke der endfertigen Montage nur noch an den Zuluftkanal und/oder den Abluftkanal einer Lüftungseinheit anzuschließen ist. .

Das Ventilatormodul ist als eigenständig handhabbare Baugruppe ausgebildet. Es stellt insofern ein standardisiertes Bauteil dar, das mit Lüftungseinheiten unterschiedlicher Bauform, Größe und Art wahlweise kombiniert werden kann. Besonderer Einrichtungen und/oder Montagearbeiten am Einbauort bedarf es insofern nicht. In vorteilhafter Weise kann das erfindungsgemäße Ventilatormodul insofern auch als Nachrüstteil eingesetzt werden.

Das Ventilatormodul nach der Erfindung verfügt über eine Ventilatoreinrichtung. Die Ventilatoreinrichtung verfügt ihrerseits über wenigstens einen Ventilatormotor und ein damit gekoppeltes Ventilatorrad.

Das Ventilatormodul verfügt desweiteren über eine Vorrichtung zur Ermittlung des von der Ventilatoreinrichtung transportierten Luftstroms. Diese Vorrichtung gestattet es im bestimmungsgemäßem Verwendungsfall, den von der Ventilatoreinrichtung geförderten Luftstrom zu ermitteln und hierauf basierend eine Steuerung der Ventilatoreinrichtung vorzunehmen. Auf Basis des erfassbaren Volumenstroms kann insbesondere eine Drehzahlregelung des Ventilatormotors der Ventilatoreinrichtung vorgenommen werden.

Das Ventilatormodul verfügt desweiteren über eine Steuerungseinrichtung, die Sensoren für Temperatur, Strömungsvolumen und relative Luftfeuchte umfasst. Mittels dieser Steuerungseinrichtung kann auf den Betrieb der Ventilatoreinrichtung Einfluss genommen werden, und zwar in Abhängigkeit der von den Sensoren für Temperatur, Strömungsvolumen und relative Luftfeuchte gelieferten Messdaten. Individuellen Wünschen und Vorgaben an die Luftqualität in dem mit Frischluft zu versorgenden Raum kann so in vorteilhafter Weise Rechnung getragen werden.

Das erfindungsgemäße Ventilatormodul ist als Funktionsgruppe zu sehen. Es umfasst die für eine bestimmungsgemäße Belüftung eines Raumes vorgesehenen Einzelkomponenten, das heißt sowohl die Ventilatoreinrichtung als auch die für eine Regelung vorzusehenden Einzelkomponenten, das heißt insbesondere die Vorrichtung zur Ermittlung des von der Ventilatoreinrichtung geförderten Luftstroms als auch die die Sensoren für Temperatur, Strömungsvolumen und relative Luftfeuchte umfassende Steuerungseinrichtung. Diese funktional gemeinschaftliche Baugruppe ist als eigenständig handhabbare Baugruppe ausgebildet, was die Kombination mit einer Lüftungseinheit in einfacher Weise gestattet. Dabei ist es insbesondere herstellerseitig möglich, das Ventilatormodul in bestimmungsgemäßer Weise vorauszurüsten, so dass am Einbauort monteurseitig nur noch wenige Handgriffe erforderlich sind. Montagearbeiten und insbesondere fehlerträchtige Ausrüstungsarbeiten zur Erzielung eines bestimmungsgemäßen Betriebs können so in vorteilhafter Weise vermieden werden. Damit erweist sich das erfindungsgemäße Ventilatormodul insbesondere unter dem Gesichtspunkt der Betriebssicherheit als vorteilhaft. Ferner kann eine vereinfache Montage vor Ort sichergestellt werden.

Die Vorrichtung zur Ermittlung des von der Ventilatoreinrichtung transportierten Volumenstroms verfügt gemäß einem weiteren Vorschlag der Erfindung über einen im Bereich einer Einlaufdüse der Ventilatoreinrichtung anzuordnenden geschlossenen Ringkanal mit einer Vielzahl von Öffnungen in der äußeren Wandung und wenigstens einer Messöffnung, ein Referenzrohr zur Positionierung in einer Umgebungsatmosphäre und einen Druckdifferenzsensor zur Verbindung mit der Messöffnung und dem Referenzrohr.

Gemäß dieser Ausgestaltung wird im Bereich einer Einlaufdüse der Ventilatoreinrichtung ein geschlossener Ringkanal mit einer Vielzahl von Öffnungen in der äußeren Wandung und einer Messöffnung angeordnet. Ein Referenzrohr wird in einer Umgebungsatmosphäre angeordnet. Der Druckdifferenzsensor wird mit der Messöffnung und dem Referenzrohr verbunden. Der Ringkanal kann aus Kunststoff gebildet sein. In vorteilhafter Weise ist der Ringkanal als geschlossener 360°-Ringkanal ausgebildet und weist in unterschiedlich umlaufenden Positionen Öffnungen auf. Vorzugsweise sind diese mitteilpunktsymmetrisch angeordnet, das heißt es gibt eine unterste und eine oberste Öffnung und in unterschiedlichen Gradabständen jeweils weitere Öffnungen. In vorteilhafter Weise ist die Messöffnung so positioniert, dass sie bei bestimmungsgemäßem Einbau des Ringkanals oberhalb des Äquators des Ringkanals angeordnet ist. Auf diese Weise kann bei der Ausbildung von Kondensat im Inneren des Ringkanals das Kondensat aus unten liegenden Öffnungen ausfließen während die Messöffnungen davon unberührt bleiben. In vorteilhafter Weise wird so sichergestellt, dass eine Verstopfung der Messöffnung durch sich ausbildendes Kondensat vermieden wird, so dass stets eine bestimmungsgemäße Ermittlung des von der Ventilatoreinrichtung transportierten, das heißt geförderten Volumenstroms möglich ist. Bei aus dem Stand der Technik bekannten Vorrichtungen zur Ermittlung des von einer Ventilatoreinrichtung transportierten Volumenstroms ist dies nicht möglich, weil die bei diesen Vorrichtungen vorgesehenen Messöffnungen aufgrund ihrer Ausgestaltung und Positionierung dazu neigen, bei auftretendem Kondensat zu verstopfen, so dass sachgerechte Messungen nicht durchgeführt werden können. Die erfindungsgemäße Weiterbildung schafft hier insofern Abhilfe.

Die Steuerungseinrichtung nach der Erfindung verfügt über einen Temperatursensor, einen Strömungsvolumensensor und einen Sensor für relative Luftfeuchte. Die Anordnung dieser Sensoren ist ortsnah zueinander ausgebildet, wobei die Sensoren im Idealfall in einer Modulbaugruppe zusammengefasst sein können. Die Sensoren sind mit einer Schaltungsplatine verbunden, die ihrerseits mit der Steuerelektronik für die Ventilatoreinrichtung in Verbindung steht. Die Schaltungsplatine kann in der Modulbaugruppe der Sensoren angeordnet sein oder mit der Sensormodulbaugruppe über einfache Datenleitung in Verbindung stehen. Im letztgenannten Fall kann die Platine integraler Bestandteil der Steuerung selbst sein.

In besonders bevorzugter Weise ist auch die Drehzahlregelung der Ventilatoreinrichtung modularschaltungstechnisch integriert.

Die Sensorausgestaltung nach der Erfindung schafft in vorteilhafter Weise die Möglichkeit, die Enthalpie des Luftstromes ermitteln zu können, womit eine deutlich präzisere und erheblich verbesserte Steuerung der Ventilatoreinrichtung ausgebildet ist, die darüber hinaus auch erheblich vereinfacht ist.

Der mittels der Sensoren für Temperatur, Strömungsvolumen und relative Luftfeuchte erfassten Messwerte können in einer Vergleichsschaltung mit vorgebbaren Sollwerten verglichen werden. In Abhängigkeit der so ermittelten Vergleichswerte kann dann eine Steuerung der Lüftungseinheit vorgenommen werden, beispielsweise durch entsprechende Anpassung der Ventilatormotordrehzahl. Auf diese Weise wird eine Regelung erzielt, die es gestattet, die durch die Lüftungseinheit bewirkte Luftströmung zur Erzielung eines angenehmen Raumklimas zu optimieren.

Die erfassten Messwerte und/oder die ermittelten Vergleichswerte können im Übrigen dazu genutzt werden, die absolute Luftfeuchte einerseits sowie die absolute Enthalpie andererseits bestimmen zu können, und zwar sowohl auf der einen Luftseite der Lüftungseinheit als auch auf der anderen Luftseite der Lüftungseinheit. Dabei wird die eine Luftseite der Lüftungseinheit typischerweise durch die Außenatmosphäre, das heißt die Außenluft und die andere Luftseite der Lüftungseinheit durch die Innenluft, das heißt die in einem Raum oder einem Teil hiervon befindliche Innenluft gebildet. Mittels der erfindungsgemäßen Einrichtung kann in diesem Zusammenhang sichergestellt werden, dass die Unterschiede zwischen Außenluft und Innenluft hinsichtlich Feuchtigkeit und Enthalpie möglichst gering ausfallen, so dass die Ausbildung einer von einem Nutzer als angenehm empfundenen Innenluft, das heißt die Aufrechterhaltung einer hohen Innenluftqualität sichergestellt ist. Bevorzugterweise wird die Ventilatormotordrehzahl deshalb derart gewählt, dass sich eine möglichst geringe Luftfeuchtigkeitsdifferenz und/oder eine möglich geringe Enthalpiedifferenz zwischen den beiden Luftseiten der Lüftungseinheit einstellt.

Die Ausgestaltung nach der Erfindung ermöglicht darüber hinaus in vorteilhafter Weise eine CO₂-Regelung. Die mit der erfindungsgemäßen Ausgestaltung mögliche CO₂-Regelung macht sich zu Nutze, dass der CO₂-Ausstoß einer Person proportional zu deren Beeinflussung der Raumfeuchtigkeit ist. Die mit dem erfindungsgemäßen Ventilatormodul mögliche Feuchtigkeitsmessung erlaubt insofern einen indirekten Rückschluss auf den CO₂-Gehalt auf der Raumluftseite der Lüftungseinheit. In vorteilhafter Weise erlaubt es die erfindungsgemäße Ausgestaltung insofern, Luftfeuchtigkeitsgrenzwerte auf Einhaltung zu prüfen, was indirekt eine CO₂-Überwachung zur Folge hat, so dass es mittels des erfindungsgemäßen Moduls möglich ist, indirekt auch die Einhaltung von vorgebbaren CO₂-Grenzwerten zu überprüfen.

Das Ventilatormodul verfügt gemäß einem weiteren Merkmal der Erfindung über eine Heizeinrichtung. Diese Heizeinrichtung dient dem Frostschutz und wird dazu genutzt, die über das Ventilatormodul im Betriebsfall angesogene Zuluft anzuwärmen, falls diese eine zu niedrige Temperatur aufweisen sollte, das heißt eine solche Temperatur, dass die Gefahr der Vereisung für die Lüftungseinheit oder Teilen hiervon, wie zum Beispiel insbesondere dem Wärmetauscher besteht. Dabei erfolgt eine Regelung der Heizeinrichtung bevorzugterweise nicht nur über die Erfassung der Temperatur der Zuluft sondern auch über die Erfassung der Luftfeuchte der Abluft. Eine entsprechende Regelungseinrichtung ist zu diesem Zweck in vorteilhafter Weise vorgesehen, die mit einer Vergleichsschaltung die von den Sensoren detektierten Messwerte mit vorgebbaren Vergleichswerten vergleicht und in Abhängigkeit des ermittelten Vergleichsergebnisses die Heizeinrichtung für die Zuluft betreibt. Dabei erbringt die Luftfeuchtemessung den Vorteil, dass die Heizeinrichtung tatsächlich nur dann betrieben wird, wenn der Luftfeuchtegehalt in der Abluft bei gegebener Temperatur der Zuluft ein Einfrieren der Lüftungseinheit oder Teilen hiervon überhaupt wahrscheinlich macht. Dabei gilt, dass die Wahrscheinlichkeit der Vereisung mit abnehmender Luftfeuchte in der Abluft ebenfalls abnimmt. Die Berücksichtigung des Luftfeuchtegehalts in der Abluft gestattet es insofern, einen unnötigen Betrieb der Heizeinrichtung zu vermeiden, was hilft, Energie zu sparen. In jedem Fall aber wird durch die erfindungsgemäße Ausgestaltung sichergestellt, dass sich aufgrund der Luftfeuchte in der Abluft in der Lüftungseinheit ansammelndes Kondensat nicht einfriert.

Die Erfindung betrifft ferner eine Vorrichtung zur Ermittlung des von einem Ventilator transportierten Volumenstroms, insbesondere zur Verwendung in einem Ventilatormodul der vorbeschriebenen Art.

Grundsätzlich ist bekannt, dass vorzugsweise der von einem Ventilator transportierte Volumenstrom gemessen wird, um Steuerungen oder Regelungen vorzunehmen. So kann beispielsweise der Förderdruck oder das Fördervolumen durch Blattverstellung, Drehzahlregelung und dergleichen verändert werden.

Bekannt sind Regelungen, bei denen die Drehzahl, abhängig von der Stromzufuhr, zum Volumenstrom in einem bestimmten Verhältnis steht. Dies geht in der Regel nur mit vorwärts gekrümmten Ventilatoren, die allerdings hohe Laufgeräusche haben. Darüber hinaus ist die Genauigkeit nur im Bereich von ± 5% realisierbar. Bei neueren, auch rückwärts gekrümmten Ventilatoren werden Druckdifferenzmessungen durchgeführt. Dafür eingesetzte Schlauchringe weisen beispielsweise alle 120° eine kleine Öffnung auf und über ein Messrohr wird die Druckdifferenz zur Außenatmosphäre festgestellt. Diese vorbekannten Vorrichtungen haben sich in der Praxis jedoch in der Regel als sehr anfällig gegen Verschmutzung und insbesondere Kondensat gezeigt. In dem Schlauchring kondensiert das Kondensat und verschließt die jeweilige Öffnung und tritt insbesondere auch in das Messrohr ein. Dieses kann jedoch nicht anders positioniert werden. Dadurch ergibt sich eine sehr schlechte Kennlinienverfolgung und damit eine sehr negative Steuerung.

Gemäß der erfindungsgemäßen Ausgestaltung wird im Bereich einer Einlaufdüse des Ventilators ein geschlossener Ringkanal mit einer Vielzahl von Öffnungen in der äußeren Wandung und einer Messöffnung angeordnet. Ein Referenzrohr wird in einer Umgebungsatmosphäre angeordnet. Ein Druckdifferenzsensor wird mit der Messöffnung und dem Referenzrohr verbunden.

Erfindungsgemäß kann der Ringkanal aus Kunststoff gebildet sein. Vorteilhafter Weise ist er als geschlossener 360° Ringkanal ausgebildet und weist in unterschiedlichen umlaufenden Positionen Öffnungen auf. Vorzugsweise sind diese mittelpunktsymmetrisch angeordnet, d.h., es gibt eine unterste und eine oberste Öffnung und in unterschiedlichen Gradabständen jeweils weitere Öffnungen. In vorteilhafter Weise ist die Messöffnung so positioniert, dass sie bei bestimmungsgemäßem Einbau des Ringkanals oberhalb des

Äquators des Ringkanals angeordnet ist. Auf diese Weise kann bei der Ausbildung von Kondensat im Inneren des Ringkanals das Kondensat aus unten liegenden Öffnungen ausfließen während die Messöffnung davon unberührt ist.

Gemäß einem besonders vorteilhaften Vorschlag der Erfindung ist der Sensor ein thermischer Druckdifferenzsensor. Dies hat den Vorteil, dass man praktisch den Massenstrom ermitteln kann, was insbesondere bei der Steuerung von Wärmetauscher- und Lüftungsanlagen von großem Vorteil ist.

Der Sensor ist in vorteilhafter Weise elektronisch auswertbar und mit einer Auswerteelektronik verbunden. Die Drehzahlregelung des Ventilators ist ebenfalls mit der Auswerteelektronik oder einer Steuerung verbunden, die ihrerseits auch die Auswerteelektronik ausliest.

Gemäß einem besonders vorteilhaften Vorschlag sind die Auswerteelektronik einschließlich des Sensors auf einer Platinenbaugruppe untergebracht. Diese kann auch zugleich die Drehzahlregelung und ggf. auch weitere Messwerte wie Temperaturen, Drücke, Druckdifferenzen, Feuchte und dergleichen auswerten und entsprechende Sensoren aufweisen. Hierdurch wird eine modulare elektronische Baugruppe für unterschiedliche Aufgaben innerhalb einer Lüftungseinheit bzw. Wärmetauschereinheit bereitgestellt. Die Wärmetauschereinheit kann zugleich noch um zusätzliche Heizelemente und dergleichen ergänzt sein.

Die Erfindung betrifft ferner ein Verfahren zur Steuerung des Volumenstroms eines Ventilators bzw. einer Ventilatoreinrichtung. Insbesondere betrifft das Verfahren die Steuerung des Volumenstroms bei einem Ventilator mit einer Stufenregelung, und zwar in dem Fall, dass von einer Leistungsstufe auf eine andere umgeschaltet wird. Das erfindungsgemäße Verfahren findet insbesondere im Zusammenhang mit dem Ventilatormodul der vorbeschriebenen Art Verwendung.

Im Stand der Technik ist es bekannt, dass die Regelungsstufen auf den Volumenstrom bezogen sind, also beispielsweise 50m³/h, 150m³/h oder 500m³/h. Wird nun beispielsweise von 50m³/h auf 500m³/h umgeschaltet, so ergibt sich grundsätzlich ein Fehler von 500m³/h-50m³/h = 450m³/h. Ein solcher von der Messstrecke festgestellter Fehler führt dazu, dass die Drehzahl sehr schnell sehr hoch gestellt wird, was üblicherweise zu einem Überschießen führt. Sie wird dann wieder entsprechend herunter gestellt, was zu einem Unterschießen des Sollwertes führt. Auf diese Weise ergibt sich eine lange iterative Annäherung an den eigentlichen Volumenstrom-Sollwert. Derartige Regelvorgänge sind tatsächlich in Gebäuden und bei Lüftungsanlagen auch zu hören, wenn die Leistungsstufen gewählt werden.

Damit wird ein Verfahren zur Steuerung des Volumenstroms eines Ventilators angegeben, welches eine schnelle und gezielte Steuerung der ausgewählten Leistungsstufe ermöglicht und ein iteratives Über- und Unterschießen um einen Sollwert vermeidet.

Die Erfindung ergibt sich aus einem Verfahren zur Steuerung des Volumenstroms eines Ventilators mit Stufenregelung für die Leistung bei einem Umschalten von einer Leistungsstufe auf eine andere, wobei bei Anwahl einer Stufe in einem ersten Schritt eine vorgegebene Drehzahl für den Ventilatormotor eingestellt und in einem zweiten Schritt die Drehzahl zur Erreichung eines vorgegebenen Volumenstroms eingestellt wird.

Gemäß der Erfindung wird also zunächst eine Solldrehzahl angesteuert und eingestellt. Diese kann vorgegeben und beispielsweise in einem Speicher bereitgestellt sein. Sie kann auch aus vorhergehenden Vorgängen empirisch ermittelt und gespeichert worden sein. So kann beispielsweise nach einer langen Laufzeit auf einer Leistungsstufe die Motordrehzahl ermittelt und gespeichert werden. Wird die Leistungsstufe angewählt, wird also in einem ersten Schritt die gespeicherte Solldrehzahl angesteuert und der Motor solange gesteuert, bis die Solldrehzahl erreicht ist. Erst jetzt beginnt die Auswertung der Volumenstrom-Sensoren, um auf diese Weise nun eine Feineinstellung der Drehzahl durchzuführen, um zu dem gewünschten Volumenstrom zu gelangen.

Da der Volumenstrom von Umweltparametern abhängen kann, ist diese Feinregelung der Ausgangsdrehzahl erforderlich. Auf diese Weise kann sehr direkt und sehr präzise ein gewünschter Volumenstrom eingestellt werden.

## Patentansprüche

1. Ventilatormodul für eine Lüftungseinheit zur Versorgung eines Raumes oder eines Teils hiervon mit Zuluft, insbesondere Frischluft, welches Modul als eigenständig handhabbare Baugruppe ausgebildet ist und aufweist:
- eine Ventilatoreinrichtung,
- eine Vorrichtung zur Ermittlung des von der Ventilatoreinrichtung transportierten Luftstroms sowie
- eine Steuerungseinrichtung, die Sensoren für Temperatur, Strömungsvolumen und relative Luftfeuchte umfasst,
**dadurch gekennzeichnet dass** das Ventilatormodul als gekapselte Baueinheit ausgestaltet ist.

2. Ventilatormodul nach Anspruch 1, **dadurch gekennzeichnet, dass** die Vorrichtung zur Ermittlung des von der Ventilatoreinrichtung transportierten Luftstroms aufweist:
- einen im Bereich einer Einlaufdüse der Ventilatoreinrichtung anzuordnenden geschlossenen Ringkanal mit einer Vielzahl von Öffnungen in der äußeren Wandung und wenigstens einer Messöffnung,
- ein Referenzrohr zur Positionierung in einer Umgebungsatmosphäre und
- einen Druckdifferenzsensor zur Verbindung mit der Messöffnung und dem Referenzrohr.

3. Ventilatormodul nach Anspruch 2, **dadurch gekennzeichnet, dass** der Ringkanal aus Kunststoff gebildet ist.

4. Ventilatormodul nach Anspruch 2 oder 3, **dadurch gekennzeichnet, dass** der Ringkanal einen geschlossenen 360 °-Ring bildet.

5. Ventilatormodul nach einem der vorhergehenden Ansprüche 2 bis 4, **dadurch gekennzeichnet, dass** die Öffnungen im Wesentlichen mittelpunktsymmetrisch in der Wandung des Ringkanals angeordnet sind.

6. Ventilatormodul nach einem der vorhergehenden Ansprüche 2 bis 5, **dadurch gekennzeichnet, dass** die Messöffnung in einer in bestimmungsgemäßer Einbauposition oberhalb des Äquators des Ringkanals liegenden Position angeordnet ist.

7. Ventilatormodul nach einem der vorhergehenden Ansprüche 2 bis 6, **dadurch gekennzeichnet, dass** der Druckdifferenzsensor ein thermischer Druckdifferenzsensor ist.

8. Ventilatormodul nach einem der vorhergehenden Ansprüche, **dadurch gekennzeichnet, dass** die Sensoren der Steuerungseinrichtung mittels einer Schaltungsplantine miteinander verbunden sind.

9. Ventilatormodul nach Anspruch 8, **dadurch gekennzeichnet, dass** die Schaltungsplatine mit einer Drehzahlregelung eines Ventilatormotors der Ventilatoreinrichtung direkt oder indirekt verbunden ist.

10. Ventilatormodul nach einem der vorhergehenden Ansprüche, **dadurch gekennzeichnet, dass** die Steuerungseinrichtung eine Schaltungsplatine aufweist, die die Anschlussschnittstellen für die Sensoren, die Auswerteelektronik und die Drehzahlregelung der Ventilatoreinrichtung umfasst.

11. Ventilatormodul nach einem der vorhergehenden Ansprüche, **gekennzeichnet durch** eine Heizeinrichtung für die Zuluft.

12. Ventilatormodul nach einem der vorhergehenden Ansprüche, **gekennzeichnet durch** eine Regelungseinrichtung, die mit einer Vergleichsschaltung die von den Sensoren für Temperatur und Luftfeuchte detektierten Messwerte mit vorgebbaren Vergleichswerten vergleicht und in Abhängigkeit des Vergleichsergebnisses die Heizeinrichtung für die Zuluft betreibt.

## Claims

1. A ventilator module for a ventilation unit for providing a room or a part of this one with supply air, in particular fresh air, which module is an assembly that can be operated independently and that comprises:
- a ventilator device,
- a device for determining the air rate transported by the ventilator device as well as
- a control device which comprises sensors for detecting the temperature, the flow volume and the relative air humidity,
**characterized in that** the ventilator module is an encapsulated modular unit.

2. A ventilator module according to claim 1, **characterized in that** the device for determining the air rate transported by the ventilator device comprises:
- a closed ring channel to be located in the area of an inlet nozzle of the ventilator device, the ring channel comprising a plurality of openings in the outer wall and at least one measurement port,
- a reference tube to be positioned in a surrounding atmosphere and
- a pressure difference sensor to be connected to the measurement port and the reference tube.

3. A ventilator module according to claim 2, **characterized in that** the ring channel is made of plastic.

4. A ventilator module according to claim 2 or 3, **characterized in that** the ring channel forms a closed ring of 360°.

5. A ventilator module according to one of the preceding claims 2 through 4, **characterized in that** the openings are arranged in the wall of the ring channel in an essentially symmetrical way with respect to the centre.

6. A ventilator module according to one of the preceding claims 2 through 5, **characterized in that** the measurement port is arranged in a position above the equator of the ring channel if it is installed as intended.

7. A ventilator module according to one of the preceding claims 2 through 6, **characterized in that** the pressure difference sensor is a thermal pressure difference sensor.

8. A ventilator module according to one of the preceding claims, **characterized in that** the sensors of the control device are connected to each other by means of a printed circuit board.

9. A ventilator module according to claim 8, **characterized in that** the printed circuit board is directly or indirectly connected to a speed regulation of a ventilator motor of the ventilator device.

10. A ventilator module according to one of the preceding claims, **characterized in that** the control device comprises a printed circuit board which comprises the connection interfaces of the sensors, the evaluation electronic and the speed regulation of the ventilator device.

11. A ventilator module according to one of the preceding claims, **characterized by** a heating device for the supply air.

12. A ventilator module according to one of the preceding claims, **characterized by** a regulating device which compares, by means of a comparator circuit, the measured values detected by the temperature and air humidity sensors to predeterminable comparison values and operates the heating device for the supply air in dependence on the comparison result.

## Revendications

1. Module de ventilateur destiné à une unité de ventilation pour fournir de l'air amené, notamment de l'air frais, à une pièce ou à une partie de celle-ci, lequel module est un assemblage qu'on peut manipuler de façon autonome et qui comprend :
- un dispositif de ventilateur,
- un dispositif de détermination du débit d'air transporté par le dispositif de ventilateur ainsi qu'
- un dispositif de commande qui comprend des capteurs de température, de débit volumique et d'humidité d'air relative,
**caractérisé en ce que** le module de ventilateur est une unité modulaire encapsulée.

2. Module de ventilateur selon la revendication 1, **caractérisé en ce que** le dispositif de détermination du débit d'air transporté par le dispositif de ventilateur comprend :
- un canal annulaire fermé à disposer au niveau d'une buse d'entrée du dispositif de ventilateur, le canal annulaire comprenant une pluralité d'ouvertures dans la paroi extérieure et au moins une ouverture de mesure,
- un tuyau de référence pour être positionné dans une atmosphère ambiante et
- un capteur de différence de pression pour être relié à l'ouverture de mesure et au tuyau de référence.

3. Module de ventilateur selon la revendication 2, **caractérisé en ce que** le canal annulaire est fabriqué en matière synthétique.

4. Module de ventilateur selon la revendication 2 ou la revendication 3, **caractérisé en ce que** le canal annulaire forme un anneau fermé de 360°.

5. Module de ventilateur selon l'une des revendications précédentes 2 à 4, **caractérisé en ce que** les ouvertures sont disposées dans la paroi du canal annulaire de façon essentiellement symétrique par rapport au centre.

6. Module de ventilateur selon l'une des revendications précédentes 2 à 5, **caractérisé en ce que** l'ouverture de mesure est disposée dans une position qui se trouve au-dessus de l'équateur du canal annulaire au cas d'installation conforme à sa destination.

7. Module de ventilateur selon l'une des revendications 2 à 6, **caractérisé en ce que** le capteur de différence de pression est un capteur de différence de pression thermique.

8. Module de ventilateur selon l'une des revendications précédentes, **caractérisé en ce que** les capteurs du dispositif de commande sont reliés les uns aux autres par moyen d'une platine de circuit imprimé.

9. Module de ventilateur selon la revendication 8, **caractérisé en ce que** la platine de circuit imprimé est directement ou indirectement reliée à une régulation de la rotation d'un moteur de ventilateur du dispositif de ventilateur.

10. Module de ventilateur selon l'une des revendications précédentes, **caractérisé en ce que** le dispositif de commande comprend une platine de circuit imprimé qui comprend les interfaces de raccordement des capteurs, de l'électronique d'évaluation et de la régulation de la rotation du dispositif de ventilateur.

11. Module de ventilateur selon l'une des revendications précédentes, **caractérisé par** un dispositif de chauffage destiné à l'air amené.

12. Module de ventilateur selon l'une des revendications précédentes, **caractérisé par** un dispositif de réglage qui compare, à l'aide d'un circuit comparateur, les valeurs de mesure détectées par les capteurs de température et d'humidité d'air à des valeurs de comparaison pré-déterminables et actionne le dispositif de chauffage destiné à l'air amené en fonction du résultat de comparaison.
